# EUROPEAN PATENT SPECIFICATION

(11) **EP 0 567 174 B1**
(45) Date of publication and mention of the grant of the patent: **04.06.1997**
(21) Application number: 93200879.0
(22) Date of filing: 27.03.1993
(51) Int. Cl.: H04N 1/21, H04N 1/32, H04N 1/387

(54) **Radiation image displaying method and apparatus**
Methode und Vorrichtung zur Anzeige von Strahlungsbildern
Méthode et appareil pour affichage d'image irradiée

(30) Priority: 21.04.1992 EP 92201106
(43) Date of publication of application: 27.10.1993
(73) Proprietor: AGFA-GEVAERT naamloze vennootschap, 2640 Mortsel (BE)
(72) Inventor: Janssens, Danny, Agfa-Gevaert N.V., B-2640 Mortsel (BE); Schoeters, Emile, Agfa-Gevaert N.V., B-2640 Mortsel (BE); Vuylsteke, Pieter, Agfa-Gevaert N.V., B-2640 Mortsel (BE); Dhaenens, Frans, Agfa-Gevaert N.V., B-2640 Mortsel (BE)

(56) References cited:
- EP-A- 0 258 976
- EP-A- 0 369 109
- GB-A- 2 147 766
- US-A- 4 847 694
- US-A- 4 996 714
- US-A- 5 015 854

## Description

### Field of the invention.

The present invention is in the field of digital radiography. The invention more specifically relates to a method and an apparatus for displaying (a) radiologic image(s).

### Background of the invention

In the field of digital radiography a wide variety of image acquisition techniques have been developed such as computerised tomography, nuclear magnetic resonance, ultrasound, detection of a radiation image by means of a CCD sensor or a video camera, radiographic film scanning etc.

Still another technique has been developed wherein a radiation image, for example x-rays transmitted by an object, is stored in a screen comprising a photostimulable phosphor such as one of the phosphors described in European patent application 503 702 published 16.09.92 and in US patent US-A-5,340,661.

The technique for reading out the stored radiation image consists of scanning the screen with stimulating radiation, such as laser light of the appropriate wavelength, detecting the light emitted upon stimulation and converting the emitted light into an electric representation for example by means of a photomultiplier. This technique further comprises digitizing and processing said electric signal and applying it to a recorder for recording a hard copy for example on film. This hard-copy can be viewed on a lightbox for diagnosic purposes.

After read-out of the image stored in the photostimulable phosphor screen one disposes of an electric image representation that can be applied to a monitor for display of the corresponding visual image.

Apparatus for performing the above-described image acquisition are commonly accompanied by a preview monitor to which the image signal is applied before being sent to an output device, i.e. a recorder or a workstation.

The image can be then be evaluated either on the recorded hard-copy or on the display unit of the workstation or on the preview monitor.

However, before the image is available at the output of the hard copy recorder, some time passes due to the duration of the recording process including the development of the film and occacionally due to formation of a queue of image signals waiting to be reproduced by the recorder.

Also when the image is shown and evaluated at the workstation some processing time is to be taken into account before the visible image is available.

Inspection on the preview monitor on the other hand can be performed almost immediately after image acquisition and hence provides for early feedback to the operator so that corrections can be performed in case the acquisition went wrong.

In hospitals that dispose of several radiology rooms it is possible that a preview monitor is installed in each radiology room in addition to a central preview monitor that is provided in the vicinity of an image acquisition apparatus.

Immediately following acquisition, the acquired image is shown on the central monitor and eventually also on monitors that are locally provided in the radiology rooms so that the evaluation can be made by the operator who is occupied in each of the rooms. Evaluation can be made very fast after image acquisition so that in case of mis-acquisition the error can be immediately corrected.

Sequentially acquired images are sequentially shown on the monitor(s). This mode of operation allows fast evaluation but has the disadvantage that the period of time of which the operator disposes to make an evaluation depends on the period of time between the display of a first image and the moment on which data regarding a subsequent image are available. In a system in which a radiation image was stored in a photostimulable phosphor screen and said image was read-out by scanning the screen with stimulating irradiation, detecting the light emitted upon stimulation and converting the detected light into a digital signal, this period typically is about 1 minute. So, it may happen that an image is already removed from the display and a subsequent image is displayed while the operator did not yet have the opportunity to evaluate the former image on the display unit.

This problem is partially solved by providing the acquisition apparatus with an interaction modality for example implemented by a wait, cancel and proceed function. Upon activation of the wait function the operator can interrupt the process of successively acquiring images so that he can study and evaluate an acquired image on the preview monitor until he activates the cancel or proceed function.

Upon activation of the proceed function the acquired image signal is sent further to the output device whereas upon activation of the cancel function, the image signal is no longer retained. After activation of either of these functions, the interruption is terminated and the acquisition apparatus starts acquiring a next image.

By using these functions the operator can dispose of a longer period of time to make a first evaluation on the preview monitor. However, this procedure decreases the throughput of the acquisition apparatus.

Further, since every acquired image is sent to each of the monitors, it may occur that an operator who is occupied in one radiology room and makes his evaluation on the locally provided monitor needs to let pass the images taken in other rooms. Since these images are of no interest to him, this brings about a waste of time and even demands from the operator increased attention to detect among the displayed images those images made in the radiology room of interest.

US patent US-A-5,015,854 issued May 14, 1991 discloses a configuration of a workstation (not preview monitor) to be interfaced with a signal gathering apparatus.

The disclosure deals in particular with the retrieval of particular images out of said large number of images stored in a storage device.

The retrieval is performed with the aid of outline images.

When a stored image is to be retrieved by the operator of the workstation, a number of outline images is displayed simultaneously on the display device so that the operator can select the image of interest on the basis of low detailed pictorial information displayed on the monitor screen. On the basis of this selection he can order display of the complete non-reduced image.

This method is generally referred to as "pictorial index" and has been described extensively by Th. Wendler et al. in Pictorial Information Systems in Medicine, published in Nato ASI Series, Vol. F19.

In US-A-4, 847, 694 a picture archiving and communication system has been disclosed wherein diagnostic image data are sent from a central image data output section to various diagnosis departments.

In US-A-4, 996, 714 images are displayed on monitors at various locations.

### Objects of the invention

It is an object of the invention to provide a display system that enables quasi immediate evaluation after acquisition of a radiation image and still gives the operator a reasonable amount of time to make an evaluation on the basis of this display without retarding the operation and the throughput of the acquisition apparatus.

It is another object of the present invention to provide such a display system adapted to a situation of multiple radiology rooms and a central image acquisition system.

It is a further object is to provide a display system wherein the image quality of the displayed image is such that the displayed image is sufficiently similar to the final image to allow image evaluation.

It is still a further object to provide such a display system to be used in connection with an image acquisition system wherein a radiation image that was stored in a photostimulable phosphor screen is read-out by scanning said screen with stimulating radiation, detecting the light emitted upon evaluation and converting the detected light into a digital signal representation.

Further objects will become apparent from the description hereinafter.

### Summary of the invention

The invention provides a method of displaying radiation images each being represented by a digital signal representation on one of a plurality of display devices comprising the steps of
- associating with each of said digital signals a code identifying one of a plurality of display devices,
- deducing reduced image signals representing reduced images from said digital signals,
- forming composed signals representing mosaic type images by means of a number of reduced image signals originating from digital signals with an identical associated code,
- applying each of said mosaic type image representing signals to an identified display device,
- as a new reduced signal is deduced, amending a composed signal composed with signals with the same associated code by means of said new reduced image signal so that at least one of the reduced images in the displayed image is replaced by the image represented by said new reduced signal and applying said amended signal to the display device identified by said associated code.

In one embodiment the radiation image is stored in a photostimulable phosphor screen and the digital signal representation of said radiation image is obtained by scanning said screen with stimulating radiation, detecting the light emitted upon stimulation and converting the detected light into a digital signal.

In the following the invention will be explained with reference to such an image acquisition system. It will be clear that this invention is not limited to this kind of image acquisition system and that alternatives may be envisioned.

By applying the method of the present invention to the images that are displayed on the display devices, for example on preview monitors, the operator disposes of a longer period of time to make a first evaluation on the recorded image.

By the method of the present invention can be provided that only those images that relate to exposures made in one radiology room are sent to the preview monitor installed in said room and that, if a mosaic type image is displayed at the local preview monitor, this mosaic type image is only composed of these component images.

The selection of the images that are to be sent to a specific room is performed by means of an identification code associated with the electrical signal representation of the image.

In one embodiment of the present invention the radiation image is stored in a photostimulable phosphor screen and the identification code is witten into an electrically erasable programmable read only memory (EEPROM) that is provided for identification purposes on a cassette conveying the stimulable phosphor screen. The provision of a such-like EEPROM chip on a cassette has been described extensively in German patent application DE-A-37 31 204.

Data relating to the exposed object, such as the patient name, and to the exposure, such as the name of the radiologist and the type of examination to be performed, are written onto the EEPROM by means of an identification camera. Supplementary to these identification data a code identifying the preview monitor to which the read-out image is to be sent can also be provided on this EEPROM device.

These data are read-out in the radiation image read out apparatus and accompany the image representing digital signal through the image processing and image recording step.

In a practical situation an identification station is often provided in each of the radiology rooms. The station itself is identified by a code, so that when the code of the identification station is associated with the screen during the identification procedure (for example written on the EEPROM on the cassette), this code automatically identifies the radiology room where the record was made and the preview monitor provided in said room. In this way, no additional identification needs to be performed.

Alternative ways of identification of the preview monitor to which the read-out image signal is to be sent are enumerated hereinbelow, this list being non-exhaustive. These data or part thereof can also be written on an identification card such as a magnetic card or on an optically readable card, it can be provided in the form of a bar code or it can be entered manually, for example by means of a keyboard input.

Reduced image signals used for composing a mosaic type image can be deduced from the digital signal representation obtained by reading out a photostimulable phosphor screen by subsampling, i.e. by sampling the digital signal at every nth position in a row and every mth position in a column of the array of pixel elements representing the image.

Alternatively a reduced image signal can be obtained by interpolation of the pixel values.

In European patent application EP-A-527 525 filed 14.08.91 and published on 22.02.93 a contrast enhancing method is disclosed which comprises the steps of receiving an original digital image represented by an array of pixel values, processing said original image and recording the processed image on a recording medium or visualising it on a display monitor, said processing comprising the steps of
a) decomposing said original image into a sequence of detail images at multiple resolution levels and a residual image at a resolution lower than the minimum of said multiple resolution levels,
b) modifying the pixel values of said detail images to yield pixel values of a set of modified detail images by means of at least one non-linear monotonically increasing odd mapping function with a slope that gradually decreases with increasing argument values and
c) computing said processed image by applying a reconstruction algorithm to the modified detail images and the residual image, the reconstruction algorithm being such that when applied to the detail images and the residual image said original image or a close approximation thereof would be obtained.

In a specific embodiment of the invention described in the above European patent application the original image is decomposed into a so-called pyramidal sequence of detail images, i.e. successively formed detail images in the set of multiresolution detail images have a reduced number of pixels.

For example, the multiresolution representation after decomposition may have a pyramidal structure such that the resolution level of the detail images differs by a factor of 2, and the detail images at each resolution level are calculated by filtering the original image with the difference of two low-pass filters and by subsampling the resulting image by a factor 2.

The used filter preferably has a two dimensional Gaussian distribution.

This procedure can be implemented as follows. The original image is filtered by means of a low pass filter as described above, and subsampled by a factor of two, which is implemented by computing the resulting low resolution approximation image g₁ only at every other pixel position of every alternate row.
A detail image b₀ at the finest level is obtained by interpolating the low resolution approximation g₁ with doubling of the number of rows and columns, and pixelwise subtracting the interpolated image from the original image.
The interpolation is effectuated by an interpolator, which inserts a column of zero values every other column, and a row of zero values every other row respectively, and next convolves the extended image with a low pass filter. The subtraction is done by an adder. The same process is repeated on the low resolution approximation g₁ instead of the original image, yielding an approximation of still lower resolution g₂ and a detail image b₁.
A sequence of detail images bᵢ, i = 0..L-1 and a residual low resolution approximation g_{L} are obtained by iterating the above process L times.
The finest detail image b₀ has the same size as the original image. The next coarser detail image b₁ has only half as many rows and columns as the first detail image b₀. At each step of the iteration the maximal spatial frequency of the resulting detail image is only half that of the previous finer detail image, and also the number of columns and rows is halved, in accordance with the Nyquist criterion. After the last iteration a residual image g_{L} is left which can be considered to be a very low resolution approximation of the original image. In the extreme case it consists of only 1 pixel which represents the average value of the original image.

When this kind of image decomposition is applied, it is advantageous to use one of the intermediate low resolution images that are generated during the decomposition of the image into a set of detail images and a residual image as the reduced image when composing the mosaic type image.

According to the image processing method described in the above mentioned European application EP-A-527 525 the pixel values of said detail images are modified to yield pixel values of a set of modified detail images. Preferably, the modification is performed according to at least one non-linear monotonically increasing odd mapping function with a slope that gradually decreases with increasing argument values.

Finally a processed image is computed by applying a reconstruction algorithm to the residual image and the modified detail images. The above mentioned European application EP 527 525 describes such-like reconstruction algorithms.

In one embodiment of such a reconstruction algorithm the residual image is first interpolated by interpolator to twice its original size and the interpolated image is next pixelwise added to the detail image of the coarsest level b'_{L-1}, using an adder. The resulting image is interpolated and added to the next finer detail image. If this process is iterated L times using the unmodified detail images b_{L-1}...b₀ then an image equal to the original image will result. If at the other hand the detail images are modified before reconstruction, then a processed image, for example a contrast enhanced image will result. The interpolators are identical to those used in the decomposition section.

The reduced image used for the composition of the mosaic type image may then consist of an image generated during the reconstruction process, said reconstruction process being limited up to some intermediate resolution level which is lower than the original image resolution.

The above-described embodiments are advantageous because the reduced image obtained by application of the above decomposition or reconstruction process has a better image quality than a subsampled image, and this high quality image is obtained in a fast way, the method does not require any additional computational effort since during the image processing the above intermediate images are already available.

The invention further discloses an apparatus for displaying radiation images each being represented by a digital signal representation on one of a plurality of display devices comprising
- means for determining an identification code associated with an image, said code identifying one of said plurality of display devices,
- means for deducing a reduced image signal from a digital signal,
- a plurality of display devices each being identified by an identification code and each comprising means for forming a composed signal representing a mosaic type image by means of a number of said reduced image signals to which the same identification code was associated, and each being provided with control means providing that when a new reduced image signal with the same identification code is deduced, a new composed signal is formed so that at least one of the component images in the mosaic-type image is replaced by the image represented by the new reduced signal and that said new composed signal is fed to said display device.

In an application wherein said radiation image is stored in a photostimulable phosphor screen, said means for determining an identification code comprises means for reading out a code from an electronic memory device provided on a cassette conveying said photostimulable phosphor screen.

In a particular embodiment the control means comprise a serial memory capable of storing at least said N reduced image signals, clock signal generating means for timing the read-out of said serial memory at regular intervals and for timing the application of the reduced signals into said means for forming the composed signal.

Preferably said serial memory device is a first in-first out memory.

### Brief description of the drawings

Particular aspects of the present invention as well as preferred embodiments thereof will be explained by means of the corresponding drawings wherein
Fig. 1 generally shows a system for reading out an image stored in a photostimulable phosphor screen,
Fig. 2 is a block scheme illustrating the data flow,
Fig. 3 is a scheme illustrating particular aspects of the present invention,
Fig. 4 shows a mosaic-type image.
Fig. 5 shows a radiographic system with one central acquisition unit and a plurality of preview monitors.

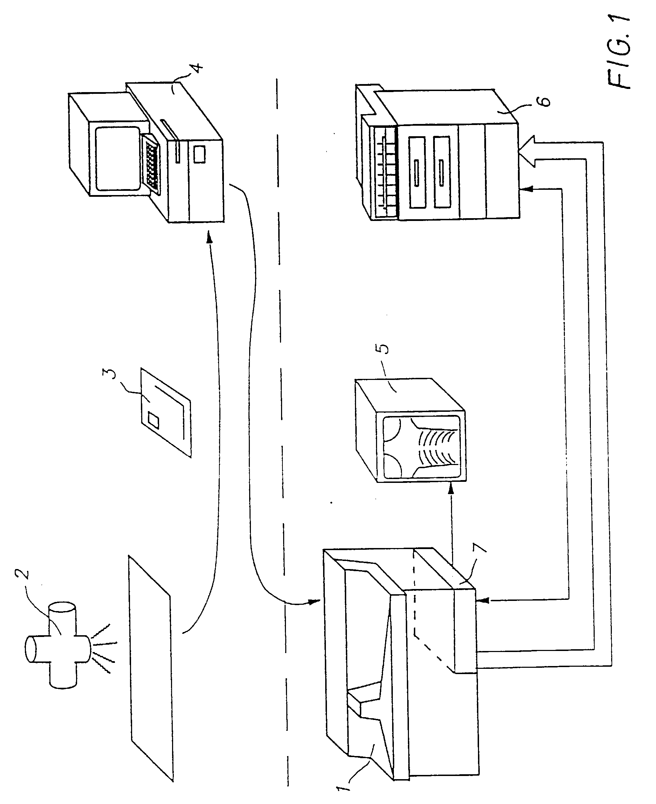

Figure 1 generally shows an apparatus in which the method of the invention can be applied.

A radiation image of an object was recorded on a photostimulable phosphor screen (3) by exposing (2) said screen to x-rays transmitted through the object (not shown). The stimulable phosphor screen was conveyed in a cassette (3) provided with an electrically erasable programmable read only memory (EEPROM). In an identification station (4) various kinds of data, for example patient identification data (name, date of birth) and data relating to the exposure and/or to the signal processing were written into the EEPROM.

In a radiation image read-out apparatus (1) the image stored in the photostimulable phosphor screen was read-out by scanning the phosphor screen with stimulating rays emitted by a laser. The stimulating rays were deflected into the main scanning direction by means of galvanometric deflection. The subscanning was performed by transporting the phosphor screen in the subscanning direction. The stimulated emission was directed onto a photomultiplier for conversion into an electrical image representation. Additionally the information stored in the EEPROM was read.

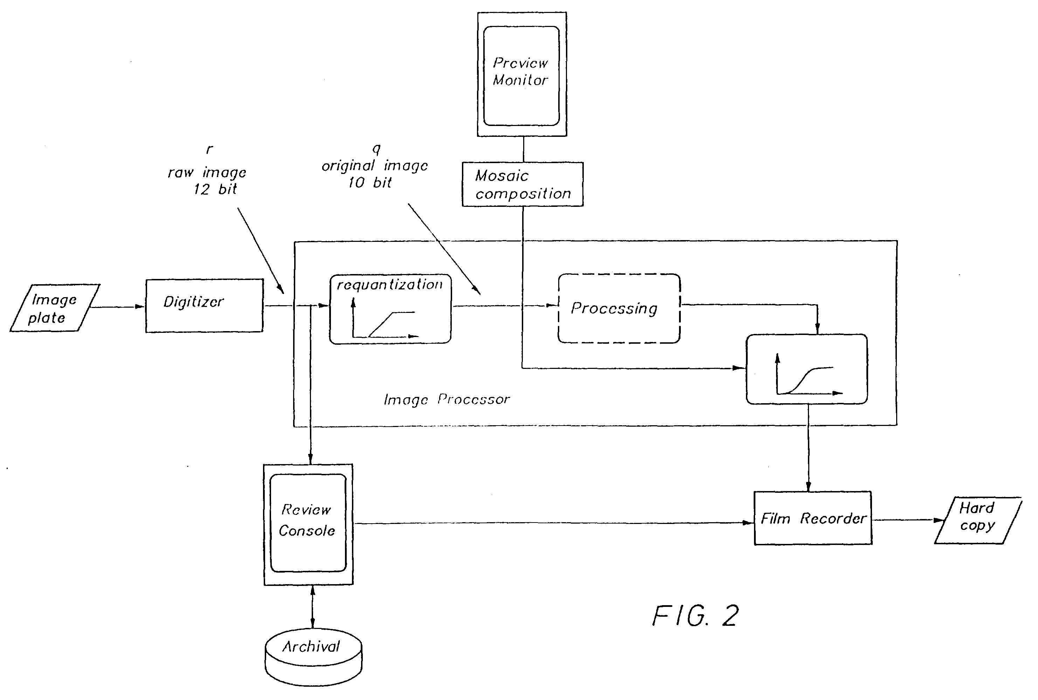

The subsequent data flow is illustrated in figure 2. The output signal of the photomultiplier was converted into a logaritmic quantity log E (E being the exposure value),and next the signal was quantised. This quantised image signal, called the raw image signal, was sent to the image processing module of the read-out apparatus (figure 1, numeral 7) where it was stored in an internal buffer.

From the image processor the image was sent to the preview monitor (figure 1, numeral 5).

Without any modifications it was also sent from the image processor to an image workstation where it was temporarily stored on a hard disc. This back up ensured that the signal was never lost, even not when any of the components of the apparatus would fail and that the signal could be retrieved for any kind of later processing, for example processing with different parameter setting. This feature could be used when the result of the on-line processing was unsatisfactory due to bad exposure conditions or inadequate selection of the processing parameters.

The latitude of the raw image is normally too large to be printed on film or to be displayed on a monitor. Therefore the latitude was confined to the diagnostically relevant region (requantization). The result hereof returned a 10 bit image, representing an image proportional to log exposure, where the grey levels below and above the diagnostically relevant region were clipped to zero and 1023 respectively.

Then the signal was fed to a circuit for forming a composed signal representing a mosaic type image, the output signal of this circuit was further applied to the frame buffer of the preview monitor for display.

It was also possible to display a single non-composed image.

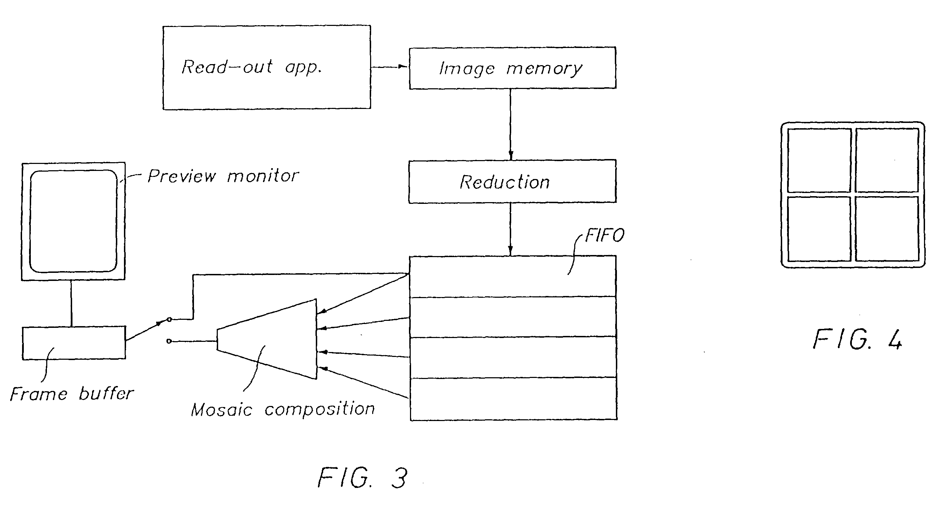

The composition of the mosaic type representing signal is explained with reference to figure 3.

The number of pixels read-out by the apparatus in the present application was 2048 pixels per line multipied by 2048 lines per image, the number of lines that is scanned being a function of the format of the screen in wherein the image was stored.

A reduced signal was extracted from the image signal by subsampling. The number of pixels was reduced by a factor 16 to 512x512 pixels.

Then the reduced signal was written into a first in, first out memory comprising 4 memory locations.

The above-described procedure was repeated under control of appropriate control and clock signals (not indicated in the figure) for subsequently read-out image signals so that the fifo was completely filled.

Next the fifo was read-out and the read-out signals were fed into a subsampling ciruit wherein each second pixel was retained. By means of the resulting signals, a mosaic type image as shown in figure 4 was composed of 4 individually recognizable images corresponding with the subsampled signals and together occupying the total number of addressable elements in the monitor.

As a new image was read-out the corresponding reduced signal was written into the first location of the fifo and the data in the other locations were shifted, the first read-in signal was dropped. Then a new signal representing a new mosaic type image was composed, fed to the frame buffer of the preview monitor and displayed.

The explanation relating to the operation of the formation of the mosaic-type image was given hereinbefore for a single monitor. In case more than one monitor is coupled to a single read-out device, the code identifying the monitor where the display of a particular image is desired was written into the EEPROM provided on the cassette wherein the image storing phosphor is conveyed and read-out in the read-out apparatus as described higher.

The apparatus then additionally comprises switching means controlled in function of the read-out identification code so as to feed the reduced signals to the identified monitor and associated first in, first out memory and composition circuitry . A mosaic type image is then composed by means of signals with the same associated code.

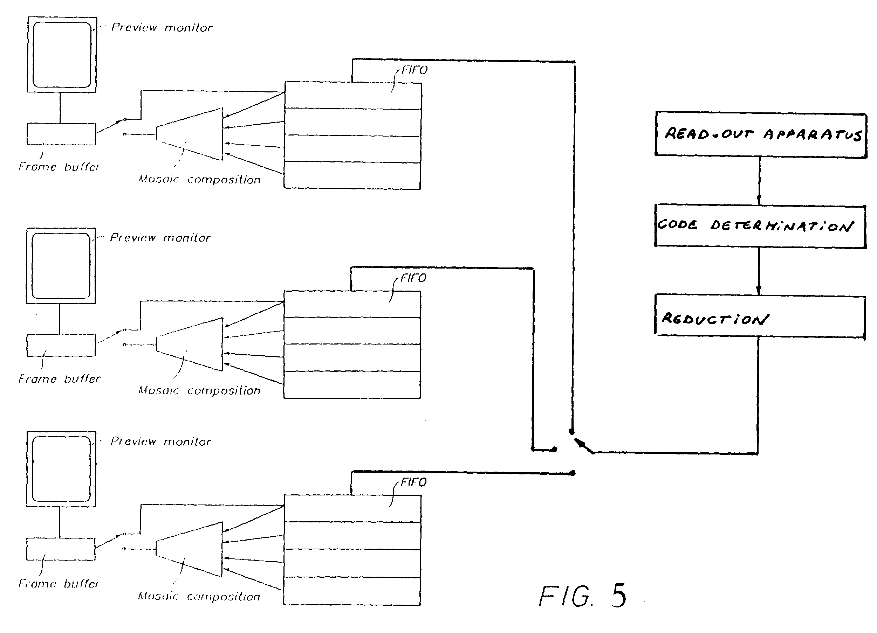

A such-like embodiment is shown in figure 5.

Display of the images on the preview monitor(s) was followed by mapping of signal values (in this case log exposure) values into corresponding density values according to a specified gradation mapping curve and the image signal was passed to a laser recorder for hard copy recording.
Occacionally this mapping can be preceded by additional signal processing such as contrast enhancement processing.

## Claims

1. A method of displaying radiation images each represented by a digital signal representation on one of a plurality of display devices comprising the steps of
- associating with each of said digital signals a code identifying one of a plurality of display devices,
- deducing reduced image signals representing reduced images from said digital signals,
- forming composed signals representing mosaic type images by means of a number of reduced image signals originating from digital signals with an identical associated code,
- applying each of said mosaic type image representing signals to an identified display device,
- as a new reduced signal is deduced, amending a composed signal composed with signals with tne same associated code by means cf said new reduced image signal so that at least one of the reduced images in the displayed image is replaced by the image represented by said new reduced signal and applying said amended signal to the display device identified by said associated code.

2. A method according to claim 1 wherein a radiation image is stored in a photostimulable phosphor screen and wherein said screen is scanned with stimulating rays, and wherein the light emitted upon stimulation is detected and converted into a digital signal representation of said image.

3. A method according to claim 2 wherein said identification code is read-out of an electronic memory device that is provided on a cassette conveying said photostimulable phosphor screen.

4. A method according to claim 1 wherein a reduced signal is obtained by subsampling or interpolating said digital signal representation.

5. A method according to claim 1 wherein said reduced image is obtained as a low resolution approximation obtained by decomposing a radiation image into a multiresolution pyramidal representation.

6. A method according to claim 1 wherein said radiation image has been subjected to decomposition into a multiresolution pyramidal representation and wherein said reduced image is an intermediate image obtained during reconstruction processing up to some intermediate resolution level which is lower than the original image resolution.

7. An apparatus for displaying radiation images each being represented by a digital signal representation on one of a plurality of display devices comprising
- means for determining an identification code associated with an image, said code identifying one of said plurality of display devices,
- means for deducing a reduced image signal from a digital signal,
- a plurality of display devices each being identified by an identification code and each comprising means for forming a composed signal representing a mosaic type image by means of a number of said reduced image signals to which the same identification code was associated, and each being provided with control means providing that when a new reduced image signal with the same identification code is deduced, a new composed signal is formed so that at least one of the component images in the mosaic-type image is replaced by the image represented by the new reduced signal and that said new composed signal is fed to said display device.

8. An apparatus according to claims 7 wherein said means for determining an identification code comprises means for reading out a code from an electronic memory device provided on a cassette conveying a photostimulable phosphor screen wherein a radiation image has been stored.

9. An apparatus according to claim 7 wherein switching means are provided for feeding either a single image signal or a composed signal to the preview monitor(s).

10. An apparatus according to claim 7 wherein said control means comprise a serial memory capable of storing at last said N reduced image signals, clock signal generating means for timing the read-out of said serial memory at regular intervals and for timing the application of the reduced signals into said means for forming the composed signal.

11. An apparatus according to claim 10 wherein said serial memory device is a first in-first out memory.

## Patentansprüche

1. Ein Verfahren zum Anzeigen von Strahlungsbildern, wobei jedes Bild durch eine Digitalsignaldarstellung auf einer der Vielzahl von Anzeigeeinheiten dargestellt ist, wobei das Verfahren die folgenden Schritte umfaßt:
- Verbinden jedes Digitalsignals mit einem Code, der eine der Vielzahl von Anzeigeeinheiten identifiziert,
- Ableiten reduzierter Bildsignale, die reduzierte Bilder darstellen, von diesen Digitalsignalen,
- Bilden zusammengesetzter, mosaikartige Bilder darstellender Signale mit Hilfe von einer Anzahl reduzierten Bildsignalen, die von Digitalsignalen mit einem identischen, zugeordneten Code stammen,
- Anlegen jedes mosaikartigen, Signale darstellenden Bildes an eine identifizierte Anzeigeeinheit,
- wenn ein neues reduziertes Signal abgeleitet wird, Ändern eines zusammengesetzten Signals, das aus Signalen mit dem gleichen, zugeordneten Code zusammengesetzt ist, mit Hilfe des besagten neuen, reduzierten Bildsignals, damit mindestes eins der reduzierten Bilder im angezeigten Bild durch das Bild ersetzt wird, das durch das neue reduzierte Signal dargestellt ist, und Anlegen des besagten geänderten Signals an die durch den besagten zugeordneten Code identifizierte Anzeigeenheit.

2. Ein Verfahren nach Anspruch 1, dadurch gekennzeichnet, daß ein Strahlungsbild in einem lichtanregbaren Leuchtstoffschirm gespeichert ist, und dadurch gekennzeichnet, daß dieser Schirm mit anregenden Strahlen abgetastet wird, und dadurch gekennzeichnet, daß das bei Anregung abgegebene Licht erfaßt und in eine Digitalsignaldarstellung dieses Bildes umgewandelt wird.

3. Ein Verfahren nach Anspruch 2, dadurch gekennzeichnet, daß besagter Code von einer elektronischen Speichereinrichtung ausgelesen wird, die auf einer Kassette versehen ist, die den lichtanregbaren Leuchtstoffschirm transportiert.

4. Ein Verfahren nach Anspruch 1, dadurch gekennzeichnet, daß ein reduziertes Signal durch Unterabtasten oder Interpolieren der Digitalsignaldarstellung erzeugt wird.

5. Ein Verfahren nach Anspruch 1, dadurch gekennzeichnet, daß das reduzierte Bild als eine Annäherung niedriger Auflösung erzeugt wird, die durch das Zerlegen eines Strahlungsbildes in eine pyramidenförmige Darstellung mit mehreren Auflösungen erhalten wird.

6. Ein Verfahren nach Anspruch 1, dadurch gekennzeichnet, daß besagtes Strahlungsbild einer Zerlegung in eine pyramidenförmige Darstellung mit mehreren Auflösungen unterworfen worden ist, und dadurch gekennzeichnet, daß das reduzierte Bild ein Zwischenbild ist, das während der Rekonstruktionsbearbeitung auflösungsmäßig bis zu einer bestimmten Zwischenhöhe, die unter der Originalauflösung des Bildes liegt, erhalten ist.

7. Ein Gerät zum Anzeigen von Strahlungsbildern, wobei jedes Bild durch eine Digitalsignaldarstellung auf einer der Vielzahl von Anzeigeeinheiten dargestellt ist, wobei dieses Gerät folgendes enthält:
- Mittel zur Bestimmung eines mit einem Bild verbundenen Identifizierungscodes, der eine der Vielzahl von Anzeigeeinheiten identifiziert,
- Mittel zur Ableitung eines reduzierten Bildsignals von einem Digitalsignal,
- eine Vielzahl von Anzeigeeinheiten, wobei jede Einheit von einem Identifizierungscode identifiziert ist und wobei jede Einheit Mittel zur Bildung eines zusammengesetzten Signals enthält, das ein mosaikartiges Bild mit Hilfe einer Anzahl besagter reduzierter Bildsignale, die dem gleichen Identifizierungscode zugeordnet wurden, darstellt, und wobei jede Einheit mit Steuermitteln versehen ist, damit bei der Ableitung eines neuen reduzierten Signals mit dem gleichen Identifizierungscode ein neues zusammengesetztes Signal gebildet wird, so daß zumindest eins der Komponentenbilder im mosaikartigen Bild durch das Bild, das durch das neue, reduzierte Signal dargestellt ist, ersetzt wird, und daß der besagten Anzeigeeinheit das besagte, neue, zusammengesetzte Signal zugeführt wird.

8. Ein Gerät nach Anspruch 7, dadurch gekennzeichnet, daß die Mittel zur Bestimmung eines Identifizierungscodes Mittel zum Auslesen eines Codes von einer elektronischen Speichereinrichtung enthalten, die auf einer Kassette versehen ist, die einen lichtanregbaren Leuchtstoffschirm, in dem ein Strahlungsbild gespeichert ist, transportiert.

9. Ein Gerät nach Anspruch 7, dadurch gekennzeichnet, daß Schaltmittel für die Zufuhr von einem einzelnen Bildsignal oder einem zusammengesetzten Bildsignal zu dem (den) Vorschaumonitor(en) bereitgestellt werden.

10. Ein Gerät nach Anspruch 7, dadurch gekennzeichnet, daß die Steuermittel einen seriellen Speicher, der imstande ist, zumindest die N reduzierten Bildsignale zu speichern, und Mittel zur Erzeugung von Taktsignalen enthalten, wobei diese Taktsignale das Auslesen dieses seriellen Speichers an regelmäßigen Intervallen bzw. das Anlegen der reduzierten Signale an die besagten Mittel zur Erzeugung des zusammengesetzten Signals timen.

11. Ein Gerät nach Anspruch 10, dadurch gekennzeichnet, daß diese serielle Speichereinrichtung ein FIFO-Speicher ist.

## Revendications

1. Un procédé pour afficher des images de rayonnement, chacune étant représentée par une représentation de signal numérique, sur un parmi plusieurs dispositifs d'affichage, lequel procédé comprend les phases suivantes:
- associer à chaque signal numérique un code identifiant un de ces dispositifs d'affichage,
- déduire des signaux d'image réduits représentant des images réduites à partir des signaux numériques,
- former des signaux composés représentant des images de type mosaïque au moyen d'un nombre de signaux d'image réduits provenant de signaux numériques avec un code associé identique,
- appliquer chaque image de type mosaïque représentant des signaux à un dispositif d'affichage identifié.
- lorsqu'un nouveau signal réduit est déduit, modifier un signal composé de signaux ayant le même code associé au moyen de ce nouveau signal d'image réduit de façon qu'au moins une des images réduites dans l'image affichée soit remplacée par l'image représentée par ce nouveau signal réduit et appliquer ce signal modifié au dispositif d'affichage identifié par ledit code associé.

2. Un procédé selon la revendication 1, caractérisé en ce qu'une image de rayonnement est stockée dans un écran à luminophore photostimulable et caractérisé en ce que cet écran est balayé avec des rayons de stimulation, et caractérisé en ce que la lumière émise suite à la stimulation est détectée et convertie en une représentation de signal numérique de cette image.

3. Un procédé selon la revendication 2, caractérisé en ce que le code est lu d'un dispositif à mémoire électronique qui est fourni sur une cassette véhiculant l'écran à luminophore photostimulable.

4. Un procédé selon la revendication 1, caractérisé en ce qu'un signal réduit est obtenu en sous-échantillonnant ou en interpolant la représentation de signal numérique.

5. Un procédé selon la revendication 1, caractérisé en ce que l'image réduite est obtenue comme une approximation à basse résolution obtenue en décomposant une image de rayonnement en une représentation pyramidale à plusieurs résolutions.

6. Un procédé selon la revendication 1, caractérisé en ce que l'image de rayonnement a été soumise à une décomposition en une représentation pyramidale à plusieurs résolutions et caractérisé en ce que l'image réduite est une image intermédiaire obtenue lors du traitement de reconstruction à un niveau de résolution intermédiaire qui est inférieur à la résolution de l'image originelle.

7. Un appareil pour afficher des images de rayonnement, chacune étant représentée par une représentation de signal numérique, sur un parmi plusieurs dispositifs d'affichage, lequel appareil comprend:
- des moyens pour déterminer un code d'identification associé à une image, ce code identifiant un de ces dispositifs d'affichage,
- des moyens pour déduire un signal d'image réduit à partir d'un signal numérique,
- plusieurs dispositifs d'affichage, chacun étant identifié par un code d'identification et chacun comprenant des moyens pour former un signal composé représentant une image de type mosaïque au moyen d'un nombre de ces signaux d'image réduits auxquels on a associé le même code d'identification, et chacun étant équipé de moyens de contrôle faisant en sorte que, quand un nouveau signal d'image réduit avec le même code d'identification est déduit, un nouveau signal composé est formé de façon à ce qu'au moins une des images composantes de l'image de type mosaïque soit remplacée par l'image représentée par le nouveau signal réduit et que ce nouveau signal composé soit acheminé vers le dispositif d'affichage.

8. Un appareil selon la revendication 7, caractérisé en ce que les moyens pour déterminer un code d'identification comprennent des moyens pour lire un code à partir d'un dispositif à mémoire électronique fourni sur une cassette véhiculant un écran à luminophore photostimulable dans lequel une image de rayonnement a été stockée.

9. Un appareil selon la revendication 7, caractérisé en ce que des moyens de commutation sont fournis pour acheminer un signal d'image unique ou un signal composé vers le(s) moniteur(s) de prévisualisation.

10. Un appareil selon la revendication 7, caractérisé en ce que les moyens de contrôle comprennent une mémoire série capable de stocker au moins les N signaux d'image réduits, des moyens générant des signaux d'horloge pour cadencer la lecture de la mémoire série à des intervalles réguliers et pour cadencer l'application des signaux réduits vers ces moyens destinés à constituer le signal composé.

11. Un appareil selon la revendication 10, caractérisé en ce que cette mémoire série est une mémoire premier entré premier sorti (FIFO).
